# EUROPÄISCHE PATENTSCHRIFT

(11) **EP 1 052 833 B1**
(45) Veröffentlichungstag und Bekanntmachung des Hinweises auf die Patenterteilung: **23.09.2009**
(21) Anmeldenummer: 00106682.8
(22) Anmeldetag: 29.03.2000
(51) Int. Cl.: H04M 1/66, G06F 12/14

(54) **Mobilfunkgerät mit geschütztem Speicherbereich**
Mobile radio device with protected memory areas
Radio mobile avec régions de mémoire protégées

(30) Priorität: 11.05.1999 DE 19921536
(43) Veröffentlichungstag der Anmeldung: 15.11.2000
(73) Patentinhaber: ROBERT BOSCH GMBH, 70442 Stuttgart (DE)
(72) Erfinder: Adi, Wael, 38108 Braunschweig (DE)

(56) Entgegenhaltungen:
- EP-A- 0 851 359
- US-A- 5 363 334
- US-A- 5 513 337
- US-A- 5 845 066

## Beschreibung

### Stand der Technik

Die Erfindung geht von einem elektronischen Gerät nach der Gattung des Hauptanspruchs aus.

Elektronische Geräte mit einem Speicherbereich, dessen Speicherstellen zum Lesen und/oder zum Schreiben adressierbar sind, sind beispielsweise in Form von Personal Computern bekannt.

Aus der US 5,363,334 ist ein löschbar programmierbares Speichergerät mit einer Anzahl von Datenspeicherzellen bekannt, die den Datenspeicher des Gerätes bilden. Die Adresse einer dieser Datenspeicherzellen wird gespeichert, um sie als eine Zelle zu kennzeichnen, die schreibgeschützt werden soll, so dass ihr Inhalt anschließend weder gelöscht noch überschrieben werden kann. Der Schreibschutz der gekennzeichneten und identifizierten Zellen wird durch Vergleich jeder Schreibzugriffsadresse mit den Adressen der Datenspeicherzellen innerhalb des geschützten Bereichs realisiert. Liegt eine gewünschte Schreibzugriffsadresse innerhalb des geschützten Bereichs, dann wird die Schreiboperation abgebrochen.

Aus der US 5,513,337 ist ein System und ein Verfahren zum Schutz vor nicht autorisiertem Speicherzugriff durch Speicheradressenvergleich und Identifizierung eines gewünschten Zugriffsmodus bekannt.

### Vorteile der Erfindung

Das erfindungsgemäße elektronische Gerät mit den Merkmalen des Hauptanspruchs hat demgegenüber den Vorteil, dass eine Adresserkennungseinheit vorgesehen ist, der vor einem Lese- und/oder vor einem Schreibzugriff auf mindestens eine Speicherstelle des Speicherbereichs die Adresse dieser Speicherstelle zugeführt ist, dass die Adresserkennungseinheit die zugeführte mindestens eine Adresse mit mindestens einer vorgegebenen Adresse vergleicht, die einer geschützten Speicherstelle des Speicherbereichs zugeordnet ist, und dass bei Übereinstimmung der mindestens einen zugeführten Adresse mit der mindestens einen vorgegebenen Adresse die Adresserkennungseinheit zumindest den Lesezugriff auf die dieser Adresse zugeordnete Speicherstelle sperrt.

Auf diese Weise können einzelne Speicherstellen eines Speicherbereichs in einem herkömmlichen Speicher, beispielsweise einem RAM, wirksam zumindest vor Lesezugriff geschützt werden, so daß für die zu schützenden Speicherstellen kein eigener Speicherbaustein erforderlich ist. Besonders schützenswerte Information kann damit in einem sowieso vorhandenen Speicher des elektronischen Gerätes abgelegt werden und mittels der Adresserkennungseinheit zumindest vor Lesezugriff geschützt werden.

Der Aufwand an Bauteilen wird somit minimiert und die Kosten reduziert.

Durch die in den Unteransprüchen aufgeführten Maßnahmen sind vorteilhafte Weiterbildungen und Verbesserungen des im Hauptanspruch angegebenen Gerätes möglich.

Besonders vorteilhaft ist es, daß Mittel zum temporären Sperren eines Schreibzugriffs auf die der mindestens einen vorgegebenen Adresse zugeordnete Speicherstelle vorgesehen sind. Auf diese Weise können die vor Lesezugriff geschützten Speicherstellen zumindest zeitweise auch vor einer Änderung ihres Inhalts geschützt werden. Der Schutz der gesperrten Speicherstellen wird dadurch erhöht.

Besonders vorteilhaft ist es, daß die Mittel zum temporären Sperren eines Schreibzugriffs eine Schreibschutzerkennungsvorrichtung umfassen, die eine zugeführte Schreibschutzinformation mit einer vorgegebenen Schreibschutzinformation vergleicht und bei Übereinstimmung die Adresserkennungseinheit veranlaßt, auch den Schreibzugriff auf die der mindestens einen vorgegebenen Adresse zugeordnete Speicherstelle zu sperren. Auf diese Weise ist es möglich, vom Zeitpunkt der Zuführung der Schreibschutzinformation an, die der mindestens einen vorgegebenen Adresse zugeordnete Speicherstelle dauerhaft vor Schreibzugriff zu schützen.

Ein weiterer Vorteil besteht darin, daß die Mittel zum temporären Sperren eines Schreibzugriffs eine Identitäts-Aufhebungs-Vorrichtung umfassen, die eine zugeführte Identitäts-Aufhebungs-Information mit dem Inhalt des Speicherregisters vergleichen und bei Übereinstimmung die Adresserkennungseinheit dazu veranlassen, die Sperrung des Schreibzugriffs auf die der mindestens einen vorgegebenen Adresse zugeordnete Speicherstelle aufzuheben. Auf diese Weise kann ein eingestellter Schreibschutz für mindestens eine Speicherstelle des Speicherbereichs wieder aufgehoben werden, jedoch nur bei Kenntnis des Inhalts des Speicherregisters bzw. der entsprechenden Speicherstellen des Speicherbereichs, so daß die Aufhebung des Schreibschutzes durch Unbefugte verhindert werden kann.

Ein weiterer Vorteil besteht darin, daß mindestens eine vor Lesezugriff geschützte Speicherstelle eine Identifikationsinformation zur Identifikation des Gerätes beinhaltet. Für die Speicherung der Identifikationsinformation muß somit kein eigener besonderes vor Zugriff geschützter Speicher zur Verfügung gestellt werden.

Ein weiterer Vorteil besteht darin, daß die Adresse der mindestens einen vor Lesezugriff geschützten Speicherstelle mit Identifikationsinformation in der Adresserkennungseinheit besonders gekennzeichnet ist, so daß eine Übertragung des Inhalts einer Speicherstelle in das Speicherregister nur dann erfolgt, wenn die zugehörige Adresse in der Adresserkennungseinheit entsprechend gekennzeichnet ist. Auf diese Weise wird sichergestellt, daß nur Identifikationsinformation in das Speicherregister übertragen und somit eine Identifizierung des elektronischen Gerätes gewährleistet wird.

Vorteilhaft ist auch, daß mindestens eine vor Lesezugriff geschützte Speicherstelle die Schreibschutzinformation beinhaltet, wobei die Schreibschutzinformation bei Adressierung dieser Speicherstelle für einen Lesezugriff in ein Schreibschutzregister der Schreibschutzerkennungsvorrichtung übertragen wird. Auf diese Weise ist auch zur Speicherung der Schreibschutzinformation keine eigene besonders vor Lesezugriff geschützte Speichereinheit erforderlich, so daß auch zur Speicherung der Schreibschutzinformation der herkömmliche Speicherbereich verwendet und Aufwand eingespart werden kann.

Besonders vorteilhaft ist es, daß eine Chiffriervorrichtung vorgesehen ist, der der Inhalt des Speicherregisters zugeführt ist und die eine verschlüsselte Antwortinformation bildet. Auf diese Weise kann der Inhalt des Speicherregisters für eine Identifikation des elektronischen Gerätes oder zur Verschlüsselung von Daten, beispielsweise von von einem als Mobilfunkgerät ausgebildeten elektronischen Gerät abzustrahlenden Nutzdaten verwendet werden.

Ein weiterer Vorteil besteht darin, daß die Chiffriervorrichtung eine nichtlineare Abbildung durchführt. Eine nichtlineare Abbildung kann so gewählt werden, daß sie besonders schwer umkehrbar ist, so daß bei Abbildung des Inhalts des Speicherregisters durch die nichtlineare Abbildung auf die verschlüsselte Antwortinformation aus der verschlüsselten Antwortinformation keine Rückschlüsse auf den die Identifikationsinformation des elektronischen Gerätes bildenden Inhalt des Speicherregisters getroffen werden können.

Besonders vorteilhaft ist es, daß die Chiffriervorrichtung, der Speicherbereich und das Speicherregister auf einem gemeinsamen Chip integriert sind. Auf diese Weise wird Platz eingespart und die Übertragung der Identifikationsinformation aus dem Speicherbereich zum Speicherregister und vom Speicherregister zur Chiffriervorrichtung besonders wirksam vor äußerem Zugriff geschützt.

### Zeichnung

Ein Ausführungsbeispiel der Erfindung ist in der Zeichnung dargestellt und in der nachfolgenden Beschreibung näher erläutert. Es zeigt die einzige Figur ein Blockschaltbild eines erfindungsgemäßen elektronischen Gerätes.

### Beschreibung des Ausführungsbeispiels

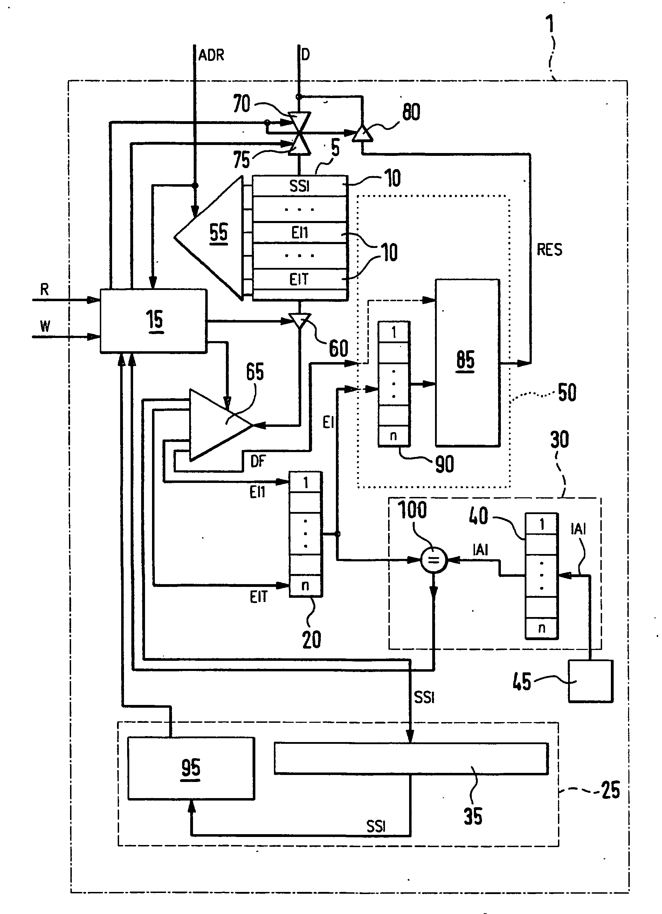

In der Figur kennzeichnet 1 ein beispielsweise als Mobilfunkgerät ausgebildetes elektronisches Gerät. Das Mobilfunkgerät 1 umfaßt einen Adresseingang ADR, der auf eine Adresserkennungseinheit 15 und auf einen Adressdecoder 55 im Mobilfunkgerät 1 geführt ist. Die Adresserkennungseinheit 15 umfaßt weiterhin einen Leseeingang R und einen Schreibeingang W, die auch Eingänge des Mobilfunkgerätes 1 sind. Je nach über den Adresseingang ADR eingegebener Adresse steuert der Adressdecoder 55 eine der eingegebenen Adresse zugeordnete Speicherstelle 10 eines Speicherbereichs 5 an. Die Adresserkennungseinheit 15 steuert erste Schaltmittel 60, zweite Schaltmittel 65, dritte Schaltmittel 70, vierte Schaltmittel 75 und fünfte Schaltmittel 80 an. Über die ersten Schaltmittel 60 können Daten aus mindestens einer Speicherstelle 10 des Speicherbereichs 5 intern, d. h innerhalb des Mobilfunkgerätes 1 ausgelesen werden, so daß sie nicht nach außen geraten und nicht vom Mobilfunkgerät 1 nach außen abgegeben werden. Die über die ersten Schaltmittel 60 aus dem Speicherbereich 5 gelesenen Daten werden dann den zweiten Schaltmitteln 65 zugeführt und von den zweiten Schaltmitteln 65 entsprechend ihrem Herkunftsort aus dem Speicherbereich 5 an weiterführende Einheiten des Mobilfunkgerätes 1 verteilt. Dazu sind die zweiten Schaltmittel 65 gemäß Figur 1 ausgangsseitig mit nichtlinearen Abbildungsmitteln 85 einer Chiffriervorrichtung 50, mit einem Speicherregister 20 und mit einem Schreibschutzregister 35 einer Schreibschutzerkennungsvorrichtung 25 verbunden. Es kann jedoch auch vorgesehen sein, daß die zweiten Schaltmittel 65 ausgangsseitig nur mit dem Speicherregister 20 und dem Schreibschutzregister 35 verbunden sind. Dabei wird dem Schreibschutzregister 35 eine Schreibschutzinformation SSI aus einer der Speicherstellen 10 des Speicherbereichs 5 zugeführt. Das Schreibschutzregister 35 ist mit einem Schreibschutzvergleicher 95 verbunden, der einen Vergleich zwischen der im Schreibschutzregister 35 gespeicherten Schreibschutzinformation SSI und einer vorgegebenen Schreibschutzinformation durchführt und in Abhängigkeit dieses Vergleichs ein Signal an die Adresserkennungseinheit 15 abgibt. Das Speicherregister 20 kann optional ausgangsseitig auf einen Identitäts-Aufhebungs-Vergleicher 100 einer Identitäts-Aufhebungs-Vorrichtung 30 geführt sein, wobei dem Identitäts-Aufhebungs-Vergleicher 100 außerdem eine Identitäts-Aufhebungs-Information IAI aus einem Identitäts-Aufhebungs-Register 40 der Identitäts-Aufhebungs-Vorrichtung 30 zuführbar ist, wobei die Identitäts-Aufhebungs-Information IAI in das Identitäts-Aufhebungs-Register 40 durch Eingabe eines Benutzers an einer Eingabeeinheit 45, vorzugsweise an einer Tastatur, einspeicherbar ist. Der Identitäts-Aufhebungs-Vergleicher 100 vergleicht den Inhalt des Speicherregisters 20 mit dem Inhalt des Identitäts-Aufhebungs-Registers 40 und bildet in Abhängigkeit des Vergleichs ein Ausgangssignal, das ebenfalls der Adresserkennungseinheit 15 zugeführt ist. Die Identitäts-Aufhebungs-Vorrichtung 30 ist jedoch, wie beschrieben, ebenso wie die Schreibschutzerkennungsvorrichtung 25 und unabhängig von dieser lediglich optional im Mobilfunkgerät 1 vorhanden. Auch die Chiffriervorrichtung 50 ist optional im Mobilfunkgerät 1 vorhanden. Der Ausgang des Speicherregisters 20 ist gemäß dem Beispiel nach der Figur auf einen Schlüsselspeicher 90 der Chiffriervorrichtung 50 geführt, der ausgangsseitig ebenfalls mit den nichtlinearen Abbildungsmitteln 85 verbunden ist. Die auf die nichtlinearen Abbildungsmittel 85 direkt über die zweiten Schaltmittel 65 und/oder über den Schlüsselspeicher 90 geführten Daten werden durch die nichtlinearen Abbildungsmittel 85 nichtlinear auf eine Antwortinformation RES abgebildet, die über die fünften Schaltmittel 80 auf einen Datenein-/-ausgang D des Mobilfunkgerätes 1 führbar sind. Über die vierten Schaltmittel 75 können Daten aus dem Speicherbereich 5 auch an den Datenein-/-ausgang D übertragen und somit außerhalb des Mobilfunkgerätes 1 zugänglich gemacht werden. Umgekehrt können Daten über den Datenein-/-ausgang D und die dritten Schaltmittel 70 in das Mobilfunkgerät 1 eingegeben und an die Speichereinheit 5 zum Abspeichern weitergeleitet werden.

Für die Erfindung wesentlich ist die Adresserkennungseinheit 15, die Ansteuerung der vierten Schaltmittel 75 in Abhängigkeit der Adressdaten am Adresseingang ADR und der Speicherbereich 5 mit den Speicherstellen 10 und deren Ansteuerung durch den Adressdecoder 55. Das Ausführungsbeispiel gemäß der Figur beschreibt dabei eine mögliche Anwendung, dieser erfindungswesentlichen Schaltung in einem Mobilfunkgerät. Dieses Ausführungsbeispiel gemäß der Figur stellt dabei eine besonders vorteilhafte Weiterbildung dieser für die Erfindung wesentlichen Schaltungsanordnung dar. Die in der Figur dargestellten Komponenten sind dabei in vorteilhafter Weise gemeinsam auf einem Chip bzw. einen Speicherchip integriert.

Der Speicherbereich 5 kann als herkömmlicher Schreib/Lesespeicher, dessen Inhalte beispielsweise bei Spannungsausfall nicht verloren gehen können, beispielsweise als nichtflüchtiger Flash/EEPROM-Speicher ausgebildet sein. Der Speicherbereich 5 soll nun dazu verwendet werden, Identifikations-Informationen EI1, ..., EIT zu speichern, wobei diese Identifikations-Informationen zumindest vor einem Lesezugriff bewahrt werden sollen. Die Identifikations-Informationen EI1, ..., EIT sind dabei jeweils in einer Speicherstelle 10 des Speicherbereichs 5 abgelegt. Die Speicherstellen 10 mit den Identifikations-Informationen EI1, ..., EIT werden nun durch die Adresserkennungseinheit 15 zumindest vor Lesezugriff geschützt, wobei dieser Schutz vor Lesezugriff nichtflüchtig in der Adresserkennungseinheit 15 hinterlegt sein muß. Die dem Adressdecoder 55 zugeführten Adressen werden dazu ebenfalls der Adresserkennungseinheit 15 zugeführt, wobei die Adresserkennungseinheit 15 die Adressen des Speicherbereichs 5 kennt, in denen die Identifikations-Informationen EI1, ..., EIT abgespeichert sind. Durch Adressvergleich stellt die Adresserkennungseinheit 15 fest, ob auf eine der Speicherstellen 10 mit Identifikations-Informationen EI1, ..., EIT zugegriffen werden soll. Ist dies der Fall, so prüft die Adresserkennungseinheit 15 anhand der Auswertung des Leseeingangs R und des Schreibeingangs W, ob ein Lese- oder ein Schreibzugriff auf diese Speicherstellen 10 durchgeführt werden soll. Übermittelt die Adresserkennungseinheit 15 einen gewünschten Lesezugriff, so sperrt sie die vierten Schaltmittel 75, damit die zu schützenden Identifikations-Informationen EI1, ..., EIT nicht über den Datenein-/-ausgang D nach außen gelangen können. Gleichzeitig veranlaßt sie die ersten Schaltmittel 60 und die zweiten Schaltmittel 65 zur Verbindung der zum Lesen ausgewählten Speicherstellen 10 mit Identifikations-Informationen EI1, ..., EIT mit entsprechenden Speicherstellen 1, ..., n des Speicherregisters 20, so daß die über die entsprechenden Adressen ausgewählten Identifikations-Informationen EI1, ..., EIT in die entsprechenden Speicherstellen 1, , n des Speicherregisters 20 geschrieben werden können. Dabei ist es möglich, eine einzige Identifikations-Information, mehrere Identifikations-Informationen oder alle Identifikations-Informationen EI1, ..., EIT des Speicherbereichs 5 zu adressieren und in das Speicherregister 20 zu schreiben. Führt der Adressenvergleich in der Adresserkennungseinheit 15 nicht zur Übereinstimmung der über den Adresseingang ADR eingegebenen Adresse oder Adressen mit den für die Identifikations-Informationen EI1, ..., EIT in der Adresserkennungseinheit 15 vorbekannten Adressen, so steuert die Adresserkennungseinheit 15 die vierten Schaltmittel 75 derart an, daß die den über den Adresseingang ADR zugeführten Adressen zugeordneten Speicherplätze 10 des Speicherbereichs 5 über den Datenein-/-ausgang D ausgelesen werden können, sofern die Adresserkennungseinheit 15 über den Leseeingang R eine Leseanforderung detektiert. Die ersten Schaltmittel 60 werden dann gesperrt, um zu verhindern, daß Informationen in das Speicherregister 20 geschrieben werden, die nicht Identifikations-Informationen sind.

Es kann jedoch auch vorgesehen sein, anstelle der Direktausgabe dieser Daten über die vierten Schaltmittel 75 und den Datenein-/-ausgang D die Daten verschlüsselt über diesen Datenein-/-ausgang D auszugeben. Dazu veranlaßt die Adresserkennungseinheit 15 die Verbindung der entsprechenden Speicherstellen 10 des Speicherbereichs 5 über die ersten Schaltmittel 60 und die zweiten Schaltmittel 65 mit den nichtlinearen Abbildungsmitteln 85 der Chiffriervorrichtung 50, so daß eine aus den entsprechenden Inhalten der adressierten Speicherstellen 10 des Speicherbereichs 5 gebildete Datenfolge DF den nichtlinearen Abbildungsmitteln 85 zugeführt und dort auf eine Antwortinformation RES abgebildet wird. Die Antwortinformation RES wird dann über die fünften Schaltmittel 80 an den Datenein-/-ausgang D gegeben, wobei die fünften Schaltmittel 80 für die Verbindung des Datenausgangs der nichtlinearen Abbildungsmittel 85 mit dem Datenein-/-ausgang D entsprechend angesteuert werden.

Für die Verschlüsselung mittels der nichtlinearen Abbildungsmittel 85 der Datenfolge DF kann dabei auch eine aus den Identifikations-Informationen EI1, ..., EIT gebildete Gesamtidentifikations-Information EI vom Speicherregister 20 über den Schlüsselspeicher 90 den nichtlinearen Abbildungsmitteln 85 zugeführt sein, so daß eine Verknüpfung zwischen der Datenfolge DF und dem Inhalt des Schlüsselspeichers 90 erfolgt, um mittels der nichtlinearen Abbildungsmittel 85 die Antwortinformation RES zu bilden.

Die in der Figur dargestellte Chiffriervorrichtung 50 ist nur beispielhaft und mit Hilfe gestrichelter Signalpfade dargestellt und beschrieben und kann die Verschlüsselung und Verknüpfung der Gesamtidentifikations-Information EI mit der Datenfolge DF auch auf beliebige andere Weise durchführen, um die Antwortinformation RES zu bilden. Beispielsweise könnte der Schlüsselspeicher 90 auch durch die Datenfolge DF geladen werden. Bei Verwendung der nichtlinearen Abbildungsmittel 85 kann jedoch eine nichtlineare Abbildung realisiert werden, die sehr schwer umkehrbar ist und Rückschlüsse auf die Gesamtidentifikations-Information EI auf der Grundlage der Antwortinformation RES verhindert, so daß die Antwortinformation RES eine verschlüsselte Datenfolge darstellt, deren nicht autorisierte Entschlüsselung wirksam verhindert wird, da nur ein autorisierter Benutzer die Gesamtindentifikations-Information EI kennen sollte. Bei der Datenfolge DF kann es sich um eine vom Mobilfunkgerät 1 verschlüsselt abzustrahlende Nutzdatenfolge handeln.

Die Gesamtidentifikations-Information EI kann jedoch auch dazu verwendet werden, um eine Identifikation des Mobilfunkgerätes 1 durch eine prüfende Station zu realisieren. Die Gesamtidentifikations-Information EI ist dann ein einzigartiger Code, der die Identität des Mobilfunkgerätes 1 eindeutig kennzeichnet. Die Datenfolge DF ist dann eine von der prüfenden Station an das Mobilfunkgerät 1 über den Datenein-/-ausgang D abgegebene Abfrageinformation. Da diese Abfrageinformation auch in der prüfenden Station genauso wie die Gesamtidentifikations-Information EI bekannt ist, kann die prüfende Station in gleicher Weise, wie das Mobilfunkgerät 1 eine zweite Antwortinformation RES' bilden und mit der ersten vom Mobilfunkgerät 1 gebildeten Antwortinformation RES, die über den Datenein-/-ausgang D an die prüfende Station gesendet wird, vergleichen, um bei Übereinstimmung die Identität des Mobilfunkgerätes 1 festzustellen.

Für das Einschreiben der Abfrageinformation in den Speicherbereich 5 sind wieder entsprechende Adressen über den Adresseingang ADR an den Adressdecoder 55 und die Adresserkennungseinheit 15 zu geben, wobei die Adresserkennungeinheit 15 durch Auswertung des Schreibeingangs W erkennt, daß ein Schreibvorgang auf diese Adressen stattfinden soll. Die Adresserkennungseinheit 15 prüft dann, ob die Speicherstellen 10, die den zugeführten Adressen zugeordnet sind, vor Schreibzugriff bewahrt werden sollen, in dem sie die zugeführten Adressen mit vorgegebenen Adressen vergleicht, für die der Schreibzugriff ausgeschlossen sein soll. Stellt die Adresserkennungseinheit 15 fest, daß die zugeführten Adressen mit den vorgegebenen Adressen im Falle des gewünschten Schreibzugriffs nicht übereinstimmen, so veranlaßt die Adresserkennungseinheit 15 die dritten Schaltmittel 70 zur Verbindung des Datenein-/-ausgangs D mit dem Speicherbereich 5, damit die entsprechend adressierten Speicherstellen 10 von außen beschrieben werden können. Sinnvollerweise soll verhindert werden, daß die Speicherstellen 10, die die Identifikations-Informationen EI1, ..., EIT beinhalten, vor nicht autorisiertem Schreibzugriff über den Datenein-/-ausgang D bewahrt werden soll, so daß deren Adressen zur Sperrung des Schreibzugriffs in der Adresserkennungseinheit 15 entsprechend vorgegeben werden. Damit wird verhindert, daß die Identifikations-Informationen EI1, ..., EIT ungewollt verfälscht werden.

Es kann jedoch gewünscht sein, daß der autorisierte Benutzer des Mobiltelefons 1 dennoch die Identifikations-Informationen EI1, ..., EIT im Speicherbereich 5 verändern möchte. Zu diesem Zweck kann im Mobilfunkgerät 1, in vorteilhafter Weise in einer weiteren Speicherstelle 10 des Speicherbereichs 5, eine Schreibschutzinformation SSI gespeichert sein, deren Adresse in der Adresserekennungseinheit 15 ebenfalls vorgegeben ist, um einen Lesezugriff von außerhalb des Mobilfunkgerätes 1 auf die Schreibschutzinformation SSI zu verhindern. Wählt der Benutzer dennoch die Speicherstelle 10 mit der Schreibschutzinformation SSI für Lesezugriff aus, so wird wie für die Identifikations-Informationen EI1, ..., EIT bereits beschrieben, die Schreibschutzinformation SSI über die ersten Schaltmittel 60 und die zweiten Schaltmittel 65 in das Schreibschutzregister 35 geschrieben, wobei die ersten Schaltmittel 60 und die zweiten Schaltmittel 65 von der Adresserkennungseinheit 15 entsprechend angesteuert werden. Ebenso werden die vierten Schaltmittel 75 von der Adresserkennungseinheit 15 so angesteuert, daß die Schreibschutzinformation SSI nicht über den Datenein-/-ausgang D nach außen gelangen kann. Der Schreibschutzvergleicher 95 vergleicht dann die im Schreibschutzregister 35 gespeicherte Schreibschutzinformation SSI mit einer vorgegebenen Schreibschutzinformation und veranlaßt bei Übereinstimmung der beiden Schreibschutzinformationen die Adresserkennungseinheit 15 zur Sperrung der Speicherstellen 10 mit den Identifikations-Informationen EI1, ... EIT auch für Schreibzugriff. In diesem Fall wird außerdem auch die Speicherstelle 10 mit der Schreibschutzinformation SSI im Speicherbereich 5 durch die Adresserkennungseinheit 15 mit Schreibschutz belegt. Fortan kann der Inhalt der Speicherstellen 10 mit den Identifikations-Informationen EI1, ..., EIT nicht mehr überschrieben werden. Voraussetzung dafür ist, daß dieser Schreibschutz nichtflüchtig in der Adresserkennungseinheit 15 hinterlegt ist. Da auch die Speicherstelle 10 mit der Schreibschutzinformation SSI nicht mehr über den Datenein-/-ausgang D überschrieben werden kann, ist es auch nicht mehr möglich, das Schreibschutzregister 35 mit einer neuen Information zu überschreiben, die nicht mehr mit der im Schreibschutzvergleicher 95 vorgegebenen Schreibschutzinformation übereinstimmt. Bei Nichtübereinstimmung des Vergleichsergebnisses wird nämlich die Adresserkennungseinheit 15 durch den Schreibschutzvergleicher 95 veranlaßt, einen bestehenden Schreibschutz für die Speicherstelle 10 mit der Schreibschutzinformation SSI aufzuheben. Wenn jedoch, wie beschrieben, die Speicherstelle 10 mit der Schreibschutzinformation SSI ebenfalls vor Schreibzugriff bewahrt wird, kann fortan keine Aufhebung des Schreibschutzes für die Speicherstellen 10 mit den Identifikations-Informationen EI1, ..., EIT mehr erfolgen.

Nur für den Fall, daß das Mobilfunkgerät 1 die IdentitätsAufhebungsvorrichtung 30 umfaßt, kann ein bestehender Schreibschutz für die Identifikations-Informationen EI1, ..., EIT im Speicherbereich 5 aufgehoben werden, vorausgesetzt dem autorisierten Benutzer des Mobilfunkgerätes 1 ist die Gesamtidentifikations-Information EI bekannt. Ist dies der Fall, so gibt er diese Gesamtidentifikations-Information EI mittels der Eingabeeinheit 45 ein, wodurch die Identitäts-Aufhebungs-Information IAI gebildet und dem Identitäts-Aufhebungs-Register 40 zugeführt wird. Die Identitäts-Aufhebungs-Information IAI kann alternativ auch vom Benutzer über den Datenein-/-ausgang D in den Speicherbereich 5 geschrieben und von dort in das Identitäts-Aufhebungs-Register 40 geladen werden, wie dies auch für das Laden des Speicherregisters 20 mit den Identifikations-Informationen EI1, ..., EIT aus dem Speicherbereich 5 beschrieben ist. Diese alternative Ausführungsform ist in der Figur nicht dargestellt. Die Identitäts-Aufhebungs-Information IAI sollte dabei frühestmöglich wieder aus dem Speicherbereich 5 gelöscht oder dort überschrieben werden, um ungewollten Zugriff darauf zu verhindern. Der Identitätsaufhebungsvergleicher 100 vergleicht dann die Identitäts-Aufhebungs-Information IAI mit der Gesamtidentifikations-Information EI und veranlaßt bei Übereinstimmung die Adresserkennungseinheit 15, den Schreibschutz für die Speicherstelle 10 mit der Schreibschutzinformation SSI aufzuheben, damit der Benutzer in diese Speicherstelle eine andere, sich von der in dem Schreibschutzvergleicher 95 vorgegebenen Schreibschutzinformation unterscheidende Information eingeben und durch einen entsprechenden Lesebefehl wie beschrieben dessen Übertragung in das Schreibschutzregister 35 veranlassen kann, so daß der Schreibschutz auch für die Speicherstellen 10 mit den Identifikations-Informationen EI1, ..., EIT wieder aufgehoben werden kann. Der Schreibschutz für die Speicherstellen 10 mit den Identifikations-Informationen EI1, ... EIT kann jederzeit auf die beschriebene Weise wieder hergestellt werden, sobald der Benutzer die Speicherstelle 10 mit der Schreibschutzinformation SSI überschreibt, die der im Schreibschutzvergleicher 95 vorgegebenen Schreibschutzinformation entspricht, und diese Schreibschutzinformation SSI durch einen entsprechenden Lesebefehl wie beschrieben in das Schreibschutzregister 35 überträgt.

Die Adressen der Speicherstellen 10 mit den Identifikations-Informationen EI1, ... EIT sind in der Adresserkennungseinheit 15 besonders gekennzeichnet, damit die zweiten Schaltmittel 65 entsprechend angesteuert werden können, um entweder die Schreibschutz-Information SSI dem Schreibschutzregister 35 oder die Identifikations-Informationen EI1, ... EIT dem Speicherregister 20 zuführen zu können. Die Adresse der Speicherstelle 10 für die Schreibschutzinformation SSI sollte dann natürlich nicht oder zumindest anders gekennzeichnet sein. Alternativ könnte natürlich auch nur die Adresse für die Speicherstelle 10 mit der Schreibschutzinformation SSI in der Adresserkennungseinheit 15 besonders gekennzeichnet sein.

Die beschriebene Erfindung ist nicht auf ein als Mobilfunkgerät ausgebildetes elektronisches Gerät 1 beschränkt, sondern kann für beliebige elektronische Geräte verwendet werden, die einen herkömmlichen Schreib/Lesespeicher oder Nur-Lese-Speicher mit zumindest vor Lesezugriff zu schützenden Speicherstellen umfassen. Dabei kann es sich beispielsweise um ein Autoradio, um ein Schnurlostelefon, um ein drahtgebundenes Telefon, um einen Personal Computer, u. s. w. handeln.

Wenn zumindest die Chiffriervorrichtung 50, das Speicherregister 20 und der Speicherbereich 5 auf einem gemeinsamen Chip oder Speicherchip integriert sind, kann verhindert werden, daß die Gesamtidentifikations-Information EI oder die Identifikations-Informationen EI1, ..., EIT ungewollt von außen aus den einzelnen Signalpfaden entnommen werden können.

## Patentansprüche

1. Elektronisches Gerät (1), insbesondere Mobilfunkgerät, mit einem, vorzugsweise nichtflüchtigen, Speicherbereich (5), wobei der Speicherbereich (5) mindestens eine Speicherstelle (10) umfasst, die zum Lesen und/oder zum Schreiben adressierbar ist, wobei eine Adresserkennungseinheit (15) vorgesehen ist, der vor einem Lese- und/oder vor einem Schreibzugriff auf mindestens eine Speicherstelle (10) des Speicherbereichs (5) die Adresse dieser Speicherstelle (10) zugeführt ist, wobei die Adresserkennungseinheit (15) die zugeführte mindestens eine Adresse mit mindestens einer vorgegebenen Adresse vergleicht, die einer geschützten Speicherstelle (10) des Speicherbereichs (5) zugeordnet ist, und wobei bei Übereinstimmung der mindestens einen zugeführten Adresse mit der mindestens einen vorgegebenen Adresse die Adresserkennungseinheit (15) zumindest den Lesezugriff durch einen Benutzer von außerhalb des elektronischen Gerätes (1) auf die dieser Adresse zugeordnete Speicherstelle (10) sperrt, **dadurch gekennzeichnet, dass** bei Zuführung einer Adresse an die Adresserkennungseinheit (15) zum Zwecke eines Lesezugriffs auf die zugeordnete Speicherstelle (10) der Inhalt dieser Speicherstelle (10) in ein internes Speicherregister (20) übertragen wird, wenn diese Speicherstelle (10) für den Lesezugriff durch einen Benutzer von außerhalb des elektronischen Gerätes (1) gesperrt ist.

2. Gerät (1) nach Anspruch 1, **dadurch gekennzeichnet, daß** Mittel (25, 30) zum temporären Sperren eines Schreibzugriffs auf die der mindestens einen vorgegebenen Adresse zugeordnete Speicherstelle (10) vorgesehen sind.

3. Gerät (1) nach Anspruch 2, **dadurch gekennzeichnet, daß** die Mittel (25, 30) zum temporären Sperren eines Schreibzugriffs eine Schreibschutzerkennungsvorrichtung (25) umfassen, die eine zugeführte Schreibschutzinformation (SSI) mit einer vorgegebenen Schreibschutzinformation vergleicht und bei Übereinstimmung die Adreßerkennungseinheit (15) veranlaßt, auch den Schreibzugriff auf die der mindestens einen vorgegebenen Adresse zugeordneten Speicherstelle (10) zu sperren.

4. Gerät (1) nach Anspruch 2 oder 3, **dadurch gekennzeichnet, daß** die Mittel (25, 30) zum temporären Sperren eines Schreibzugriffs eine Identitätsaufhebungsvorrichtung (30) umfassen, die eine zugeführte Identitätsaufhebungsinformation (IAI) mit dem Inhalt des Speicherregisters (20) vergleichen und bei Übereinstimmung die Adreßerkennungseinheit (15) dazu veranlassen, die Sperrung des Schreibzugriffs auf die der mindestens einen vorgegebenen Adresse zugeordnete Speicherstelle (10) aufzuheben.

5. Gerät (1) nach einem der vorherigen Ansprüche, **dadurch gekennzeichnet, daß** mindestens eine vor Lesezugriff geschützte Speicherstelle (10) eine Identifikationsinformation (EI1, . .., EIT) zur Identifikation des Gerätes (1) beinhaltet.

6. Gerät (1) nach Anspruch 5, **dadurch gekennzeichnet, daß** die Adresse der mindestens einen vor Lesezugriff geschützten Speicherstelle (10) mit Identifikationsinformation (EI1, ..., EIT) in der Adreßerkennungseinheit (15) besonders **gekennzeichnet** ist, so daß eine Übertragung des Inhalts einer Speicherstelle (10) in das Speicherregister (20) nur dann erfolgt, wenn die zugehörige Adresse in der Adreßerkennungseinheit (15) entsprechend **gekennzeichnet** ist.

7. Gerät (1) nach einem der Ansprüche 3 bis 6, **dadurch gekennzeichnet, daß** mindestens eine vor Lesezugriff geschützte Speicherstelle (10) die Schreibschutzinformation (SSI) beinhaltet, wobei die Schreibschutzinformation (SSI) bei Adressierung dieser Speicherstelle (10) für einen Lesezugriff in ein Schreibschutzregister (35) der Schreibschutzerkennungsvorrichtung (25) übertragen wird.

8. Gerät (1) nach einem der Ansprüche 4 bis 7, **dadurch gekennzeichnet, daß** die Identitätsaufhebungsinformation (IAI) einem Identitätsaufhebungsregister (40) der Identitätsaufhebungsvorrichtung (30), vorzugsweise über eine Eingabeeinheit (45) des Gerätes (1), zuführbar ist.

9. Gerät (1) nach einem der vorherigen Ansprüche, **dadurch gekennzeichnet, daß** eine Chiffriervorrichtung (50) zur Verschlüsselung mindestens einer Identifikations-Information (EI1, ..., EIT) oder von Daten vorgesehen ist.

10. Gerät (1) nach Anspruch 9, **dadurch gekennzeichnet, daß** die Chiffriervorrichtung (50) eine nichtlineare Abbildung durchführt.

11. Gerät (1) nach Anspruch 10, **dadurch gekennzeichnet, daß** der Chiffriervorrichtung (50) die Daten über den Speicherbereich (5) zuführbar sind, daß die Daten mittels des Inhalts des Speicherregisters (20) und/oder eines Schlüsselspeichers (90) sowie der nichtlinearen Abbildung auf die Antwortinformation (RES) abgebildet werden, um verschlüsselte Daten oder eine verschlüsselte Identifikationsinformation zu bilden.

12. Gerät (1) nach Anspruch 9, 10 oder 11, **dadurch gekennzeichnet, daß** die Chiffriervorrichtung (50), der Speicherbereich (5) und das Speicherregister (20) auf einem gemeinsamen Chip integriert sind.

## Claims

1. Electronic appliance (1), particularly a mobile radio, having a, preferably non-volatile, memory area (5), wherein the memory area (5) comprises at least one memory location (10) which can be addressed for reading and/or for writing, wherein an address recognition unit (15) is provided which, prior to read and/or write access to at least one memory location (10) in the memory area (5), is supplied with the address of this memory location (10), wherein the address recognition unit (15) compares the supplied at least one address with at least one prescribed address which is associated with a protected memory location (10) in the memory area (5), and wherein if the at least one supplied address matches the at least one prescribed address then the address recognition unit (15) blocks at least the read access to the memory location (10) associated with this address by a user from outside the electronic appliance (1), **characterized in that** in the event of an address being supplied to the address recognition unit (15) for the purpose of read access to the associated memory location (10), the content of this memory location (10) is transferred to an internal memory register (20) if this memory location (10) is blocked for read access by a user from outside the electronic appliance (1).

2. Appliance (1) according to Claim 1, **characterized in that** means (25, 30) for temporarily blocking write access to the memory location (10) associated with the at least one prescribed address are provided.

3. Appliance (1) according to Claim 2, **characterized in that** the means (25, 30) for temporarily blocking write access comprise a write protect recognition apparatus (25) which compares a supplied write protect information item (SSI) with a prescribed write protect information item and, if there is a match, prompts the address recognition unit (15) to also block the write access to the memory location (10) associated with the at least one prescribed address.

4. Appliance (1) according to Claim 2 or 3, **characterized in that** the means (25, 30) for temporarily blocking write access comprise an identity cancellation apparatus (30) which compares a supplied identity cancellation information item (IAI) with the contents of the memory register (20) and, if there is a match, prompts the address recognition unit (15) to cancel the blocking of the write access to the memory location (10) associated with the at least one prescribed address.

5. Appliance (1) according to one of the preceding claims, **characterized in that** at least one memory location (10) protected from read access contains an identification information item (EI1, ..., EIT) for identifying the appliance (1).

6. Appliance (1) according to Claim 5, **characterized in that** the address of the at least one memory location (10) protected from read access is particularly **characterized by** means of identification information (EI1, ..., EIT) in the address recognition unit (15), so that the content of a memory location (10) is transferred to the memory register (20) only when the associated address is appropriately **characterized in** the address recognition unit (15).

7. Appliance (1) according to one of Claims 3 to 6, **characterized in that** at least one memory location (10) protected from read access contains the write protect information item (SSI), wherein the write protect information item (SSI) is transferred to a write protect register (35) in the write protect recognition apparatus (25) when this memory location (10) is addressed for read access.

8. Appliance (1) according to one of Claims 4 to 7, **characterized in that** the identity cancellation information item (IAI) can be supplied to an identity cancellation register (40) in the identity cancellation apparatus (30), preferably using an input unit (45) on the appliance (1).

9. Appliance (1) according to one of the preceding claims, **characterized in that** an enciphering apparatus (50) is provided for the purpose of encrypting at least one identification information item (EI1, ..., EIT) or data.

10. Appliance (1) according to Claim 9, **characterized in that** the enciphering apparatus (50) performs non-linear mapping.

11. Appliance (1) according to Claim 10, **characterized in that** the enciphering apparatus (50) can be supplied with the data via the memory area (5), **in that** the data are mapped onto the response information item (RES) by means of the content of the memory register (20) and/or a key memory (90) and also the non-linear mapping in order to form encrypted data or an encrypted identification information item.

12. Appliance (1) according to Claim 9, 10 or 11, **characterized in that** the enciphering apparatus (50), the memory area (5) and the memory register (20) are integrated on a common chip.

## Revendications

1. Appareil électronique (1), en particulier radiotéléphone mobile, qui présente une zone de mémoire (5) de préférence non volatile, la zone de mémoire (5) comprenant au moins un emplacement de mémoire (10) auquel il est possible de s'adresser pour la lecture et/ou l'écriture,
l'appareil comprenant une unité (15) de reconnaissance d'adresse à laquelle l'adresse de cet emplacement de mémoire (10) est amenée avant un accès à la lecture et/ou un accès à l'écriture sur au moins un emplacement de mémoire (10) de la zone de mémoire (5),
l'unité (15) de reconnaissance d'adresse comparant la ou les adresses qui lui sont apportées à au moins une adresse prédéterminée qui est associée à un emplacement de mémoire (10) protégé de la zone de mémoire (5), et en cas de correspondance entre la ou les adresses amenées et la ou les adresses prédéterminées, l'unité (15) de reconnaissance d'adresse empêche un utilisateur au moins d'accéder à la lecture de l'emplacement de mémoire (10) associé à cette adresse depuis l'extérieur de l'appareil électronique (1),
**caractérisé en ce que**
lorsqu'une adresse est amenée à l'unité (15) de reconnaissance d'adresse en vue d'un accès à la lecture à l'emplacement de mémoire (10) associé, le contenu de cet emplacement de mémoire (10) est transféré dans un registre de mémoire interne (20) si un utilisateur est empêché d'accéder à la lecture de cet emplacement de mémoire (10) depuis l'extérieur dans l'appareil électronique (1).

2. Appareil (1) selon la revendication 1, **caractérisé en ce qu'**il présente des moyens (25, 30) de blocage temporaire d'un accès à l'écriture sur l'emplacement de mémoire (10) associé à la ou aux adresses prédéterminées.

3. Appareil (1) selon la revendication 2, **caractérisé en ce que** les moyens (25, 30) de blocage temporaire d'un accès à l'écriture comprennent un dispositif (25) de détection de protection contre l'écriture qui compare une information (SSI) de protection contre l'écriture qui lui est apportée à une information prédéterminée de protection contre l'écriture et qui, en cas de correspondance, permet à l'unité (15) à reconnaissance d'adresse de bloquer également l'accès à l'écriture sur l'emplacement de mémoire (10) associé à la ou aux adresses prédéterminées.

4. Appareil (1) selon les revendications 2 ou 3, **caractérisé en ce que** les moyens (25, 30) de blocage temporaire de l'accès à l'écriture comprennent un dispositif (30) de suppression d'identité qui compare une information (IAI) de suppression d'identité qui lui est apportée au contenu du registre de mémoire (20) et qui, en cas de correspondance, permet à l'unité (15) de reconnaissance d'adresse de supprimer le blocage de l'accès à l'écriture sur l'emplacement de mémoire (10) associé à la ou aux adresses prédéterminées.

5. Appareil (1) selon l'une des revendications précédentes, **caractérisé en ce qu'**au moins un emplacement de mémoire (10) protégé contre l'accès à l'écriture contient une information (EI1, ..., EIT) d'identification qui permet d'identifier l'appareil (1).

6. Appareil (1) selon la revendication 5, **caractérisé en ce que** l'adresse du ou des emplacements de mémoire (10) protégés contre l'accès à l'écriture est identifiée de façon particulière par une information d'identification (EI1, ..., EIT) dans l'unité (15) de reconnaissance d'adresse, de telle sorte qu'un transfert du contenu d'un emplacement de mémoire (10) dans le registre de mémoire (20) n'a lieu que si l'adresse associée a été reconnue de manière appropriée dans l'unité (15) de reconnaissance d'adresse.

7. Appareil (1) selon l'une des revendications 3 à 6, **caractérisé en ce qu'**au moins un emplacement de mémoire (10) protégé contre l'accès à l'écriture contient une information de protection contre l'écriture (SSI), l'information de protection contre l'écriture (SSI) étant transférée dans un registre (35) de protection contre l'écriture du dispositif (25) de reconnaissance de la protection contre l'écriture lorsque l'on s'adresse à cet emplacement de mémoire (10) en vue d'un accès à la lecture.

8. Appareil (1) selon l'une des revendications 4 à 7, **caractérisé en ce que** l'information (IAI) de suppression d'identité peut être transférée à un registre (40) de suppression d'identité du dispositif (30) de suppression d'identité, de préférence par l'intermédiaire d'une unité d'introduction (45) de l'appareil (1).

9. Appareil (1) selon l'une des revendications précédentes, **caractérisé en ce qu'**il présente un dispositif de cryptage (50) qui crypte au moins une information d'identification (EI1, ..., EIT) ou des données.

10. Appareil (1) selon la revendication 9, **caractérisé en ce que** le dispositif de cryptage (50) exécute une représentation non linéaire.

11. Appareil (1) selon la revendication 10, **caractérisé en ce que** les données concernant la zone de mémoire (5) peuvent être transférées au dispositif de cryptage (50) et **en ce qu'**au moyen du contenu du registre de mémoire (20) et/ou d'une mémoire de clé (90) ainsi que de la représentation non linéaire, les données sont représentées dans l'information de réponse (RES) pour former des données cryptées ou une information cryptée d'identification.

12. Appareil (1) selon les revendications 9, 10 ou 11, **caractérisé en ce que** le dispositif de cryptage (50), la zone de mémoire (5) et le registre de mémoire (20) sont intégrés sur une puce commune.
